# FASCICULE DE BREVET EUROPEEN

(11) **EP 0 403 391 B1**
(45) Date de publication et mention de la délivrance du brevet: **01.09.1993**
(21) Numéro de dépôt: 90401659.9
(22) Date de dépôt: 14.06.1990
(51) Int. Cl.: G01F 23/32, G01F 23/36

(54) **Dispositif de mesure de niveau de carburant dans un réservoir de véhicule automobile**
Kraftstoffniveaumessvorrichtung in einem Behälter eines Kraftfahrzeuges
Device for measuring the fuel level in a tank of an automobile vehicle

(30) Priorité: 15.06.1989 FR 8907949
(43) Date de publication de la demande: 19.12.1990
(73) Titulaire: JAEGER, F-92303 Levallois-Perret (FR)
(72) Inventeur: Baux, Christian, F-92300 Levallois (FR); Salaun, Thierry, F-95560 Montsoult (FR)
(74) Mandataire: Martin, Jean-Jacques

(56) Documents cités:
- DE-C- 3 310 704
- US-A- 3 449 955
- US-A- 3 925 747

## Description

La présente invention concerne un dispositif de mesure de niveau de carburant dans un réservoir de véhicule automobile.

Elle concerne plus précisément les dispositifs à flotteur et résistance variable, indexés sur le fond, du type comprenant :
- une embase destinée à être fixée sur une paroi du réservoir,
- un support articulé autour d'un axe horizontal sur la partie de l'embase interne au réservoir,
- un patin porté à l'extrémité inférieure du support de sorte que le patin repose contre le fond du réservoir,
- un élément résistif porté par le support,
- un flotteur porté par un bras, articulé autour d'un axe non vertical sur le support pour suivre le niveau de carburant, et
- un curseur porté par le bras et reposant sur l'élément résistif pour définir une résistance variable en fonction du niveau de liquide contenu dans le réservoir.

De tels dispositifs sont par exemple décrits dans les documents US-A-3925747, US-A-3449955 et DE-C-3310704.

Ces dispositifs sont couramment dénommes "à indexation sur le fond".

Dans la mesure où le support portant l'élément résistif est sollicité en appui contre le fond du réservoir, ces dispositifs à indexation sur le fond permettent d'améliorer la précision de mesure par rapport aux systèmes antérieurs dans lesquels le support d'élément résistif était porté rigidement par la paroi du réservoir.

Cependant, la demanderesse a déterminé que si des précautions additionnelles ne sont pas prises quant à la géométrie du patin, ces systèmes classiques à indexation sur le fond sont entachés d'une légère erreur et cette erreur peut être grave lorsqu'il s'agit de jauger une quantité minimale de réserve dans le réservoir.

La présente invention a maintenant pour but de perfectionner les dispositifs du type précité en améliorant leur fidélité de sorte que quelle que soit la position du fond du réservoir suite à des déformations éventuelles, le dispositif conforme à la présente invention fournisse toujours la même information "de réservoir vide" lorsque le niveau de carburant correspond à la même hauteur minimale jaugeable au dessus du fond.

Ce but est atteint selon la présente invention grâce à un dispositif de mesure du type défini précédemment, caractérisé par le fait que le patin possède un axe de rotation, et le centre de flottaison du flotteur se déplace sur un cercle passant par cet axe de rotation lequel centre de flottaison du flotteur est coaxial à l'axe de rotation du patin lorsque le niveau de carburant dans le réservoir coïncide avec l'axe de rotation du patin, de sorte que quelle que soit la position du fond du réservoir, en raison de déformations éventuelle de celui-ci, lorsque le niveau de carburant coïncide avec l'axe de rotation du patin, le bras de flotteur occupe toujours la même position relative vis à vis du support.

D'autres caractéristiques, buts et avantages de la présente invention apparaîtront à la lecture de la description détaillée qui va suivre, et en regard des dessins donnés à titre d'exemples non limitatifs, sur lesquels :
- la figure 1 représente une vue schématique latérale d'un dispositif conforme à un mode de réalisation préférentiel de la présente invention et,
- la figure 2 représente schématiquement une variante de dispositif conforme à la présente invention.

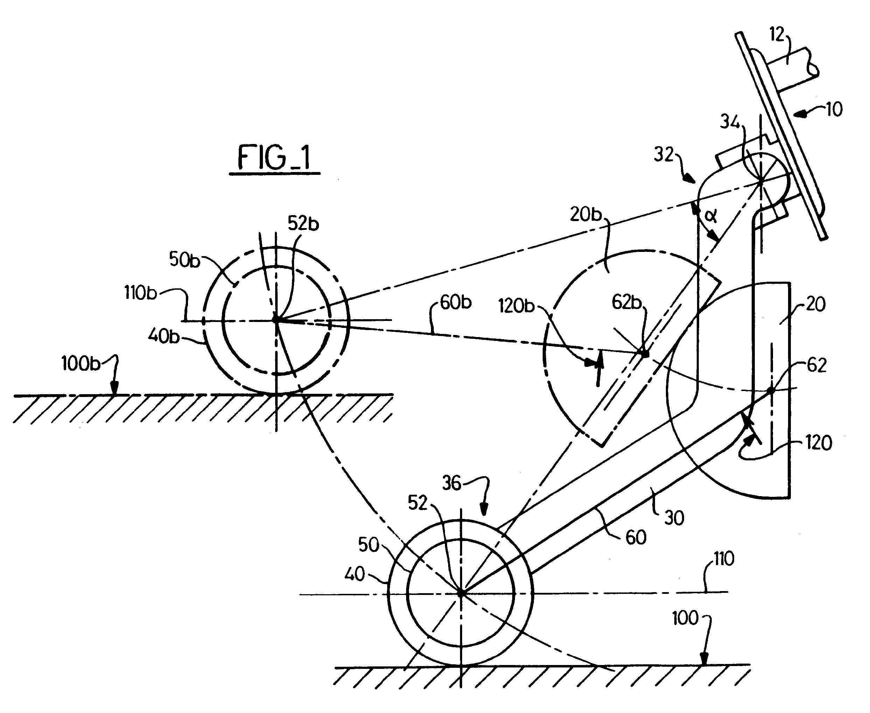

Sur la figure 1 annexée, on distingue une embase 10, un boitier de résistance 20, un support de boitier de résistance 30, un patin 40, un flotteur 50 et un bras de flotteur 60.

L'embase 10 est destinée à être fixée sur une paroi du réservoir, de préférence une paroi non horizontale, telle qu'une paroi latérale du réservoir de carburant. Elle porte de préférence des contacts électriques reliés à la résistance prévue dans le boitier 20. L'embase 10 est par ailleurs traversée par des tubulures, telle que la tubulure d'aspiration 12, de façon connue en soi. L'embase 10 peut faire l'objet de nombreux modes de réalisation et ne sera donc pas décrite plus en détail par la suite.

Le boitier 20 loge un élément résistif coopérant avec un curseur porté par le bras 60 pour définir une résistance variable en fonction du niveau de liquide contenu dans le réservoir.

Le boitier 20 est fixé rigidement sur le support 30. Ce support 30 est formé pour l'essentiel d'une tige allongée. Celle-ci peut-être non rectiligne, comme représentée sur la figure annexée, notamment pour faciliter l'insertion de l'ensemble dans le réservoir.

Le support 30 est articulé, à son extrémité supérieure 32, autour d'un axe horizontal 34, sur la partie de l'embase 10 interne au réservoir.

Cet axe 34 est donc fixe dans l'espace.

Le patin 40 est fixé à l'extrémité inférieure 36 du support 30 (soit l'extrémité du support 30 opposée à l'embase 10).

De préférence un organe élastique, non représenté sur les figures annexées pour simplifier l'illustration, solidaire de l'embase 10, sollicite le support 30 vers le bas de sorte que le patin 40 repose en permanence sur le fond 100 du réservoir.

On définit ainsi, de façon connue en soi une indexation de l'ensemble de détection sur le fond du réservoir, quelle que soit la position de celui-ci, suite à des déformations éventuelles.

Le flotteur 50 est fixé à une première extrémité du bras 60. Celui-ci est articulé autour d'un axe non vertical, de préférence horizontal 62 sur le boitier 20 à sa seconde extrémité. Ainsi lorsque le niveau de carburant évolue dans le réservoir, le flotteur 50 suivant le niveau de carburant, le bras 60 pivote autour de l'axe 62 et définit grâce à son curseur une résistance représentative du niveau de carburant.

Le bras 60 peut être rectiligne comme représenté sur la figure annexée. Ce n'est pas cependant une condition essentielle.

Par ailleurs sur la figure 1 annexée, on a référencé 110 le niveau minimal jaugeable de carburant correspondant à un niveau vide sur l'indicateur associé.

Plus précisément, on a représenté en traits pleins sur la figure 1 annexée la position de l'ensemble de détection en position basse du fond du réservoir 100, tandis que le même ensemble est représenté en traits interrompus et assorti d'un indice "b" en position haute du fond du réservoir.

La déformation du fond du réservoir de la position basse 100 à la position haute 100b, fait pivoter le support 30, et le boitier 20 qui lui est lié, d'un angle α.

Comme indiqué précédemment l'ensemble conforme à la présente invention est conçu de sorte que quelle que soit la position du fond du réservoir entre les positions 100 et 100b, il fournisse toujours la même valeur de résistance, donc la même information de réservoir vide, lorsque le niveau de carburant correspond à la même hauteur minimale jaugeable au dessus du fond 110.

Cela suppose comme indiqué précédemment que quelle que soit la position du fond du réservoir 100, lorsque le niveau de carburant correspond à la hauteur minimale jaugeable 110, le bras de flotteur 60 occupe toujours la même position relative vis à vis du support 30 et du boitier 20 associé.

Cette condition est remplie selon le mode de réalisation préférentiel représenté sur la figure 1 annexée grâce à la réunion des caractéristiques suivantes :
- le patin 40 définit une enveloppe d'appui sur le fond du réservoir 100, qui est circulaire centrée sur un axe horizontal ; le patin 40 peut par exemple être cylindrique ou sphérique,
- le rayon de cette enveloppe circulaire correspond à la hauteur du niveau minimal jaugeable 110 au dessus du fond de réservoir 100, et
- le centre de flottaison 52 du flotteur se déplace sur un cercle passant par l'axe central de l'enveloppe circulaire du patin, de sorte que le centre de flottaison 52 du flotteur 50 soit coaxial à l'axe du patin 40 lorsque le réservoir contient un niveau minimal jaugeable 110.

Par ailleurs, la distance séparant le centre de flottaison du flotteur du point le plus bas du flotteur 50 est au plus égale au rayon de l'enveloppe circulaire du patin 40.

Le patin 40 lorsqu'il définit une enveloppe d'appui circulaire peut être soit fixé rigidement sur le support 30, soit articulé à rotation sur celui-ci autour d'un axe horizontal qui coïncide avec l'axe central de l'enveloppe circulaire d'appui.

Le patin 40 peut également ne pas définir une enveloppe circulaire d'appui sur le fond 100 du réservoir, sous réserve d'être articulé sur le support 30 autour d'un axe horizontal séparé de sa face d'appui sur le fond du réservoir, d'une distance qui est égale à la hauteur jaugeable minimale. Dans la suite de la présente demande on appellera axe de rotation du patin 40, soit l'axe de l'enveloppe circulaire d'appui, soit l'axe d'articulation du patin sur le support, selon le cas.

Selon la figure 1 annexée, le flotteur 50 présente une section droite verticale circulaire (il peut être par exemple cylindrique ou sphérique). Le flotteur peut être fixé rigidement sur le bras 60. Dans ce cas, le point de fixation du bras 60 sur le flotteur 50 peut ainsi être articulé sur le bras 60 autour d'un axe horizontal qui coïncide avec le centre de flottaison 52 du flotteur 50.

D'une façon plus générale lorsque le flotteur 50 est articulé sur le bras 60 autour d'un axe horizontal qui coïncide avec son centre de flottaison 52, la géométrie du flotteur 50 peut être quelconque.

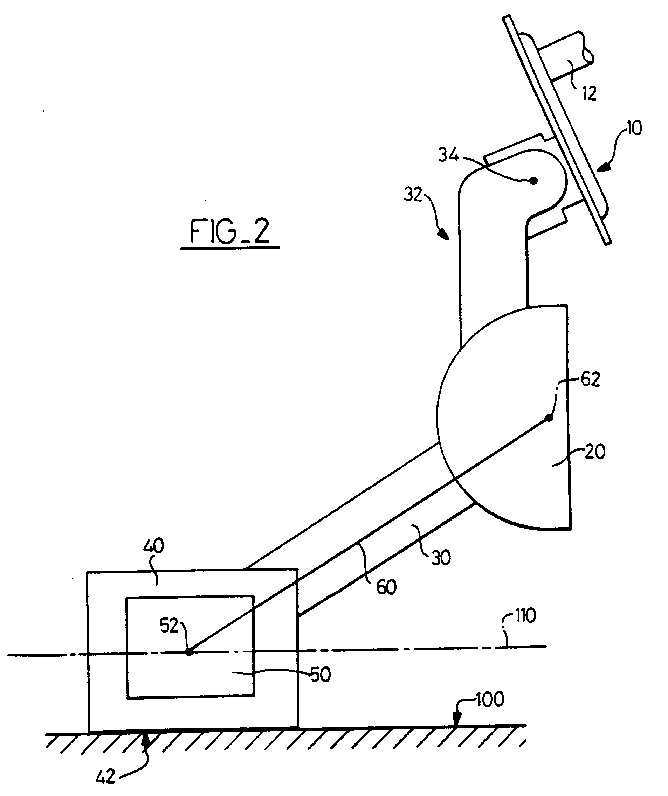

On a ainsi représenté sur la figure 2 annexée une variante de réalisation selon laquelle :
- le patin 40 présente une section droite verticale de géométrie rectangulaire, il est articulé sur l'extrémité inférieure du support 30 autour d'un axe horizontal qui est séparé de sa face d'appui 42 sur le fond du réservoir 100, d'une distance qui est égale à la hauteur jaugeable minimale, et
- le flotteur 50 de section droite verticale rectangulaire est articulé sur le bras 60 autour d'un axe horizontal 52 qui passe par le centre de flottaison du flotteur,
- ce centre de flottaison est coaxial à l'axe d'articulation du patin 40 sur le support 30, lorsque le niveau de carburant correspond au niveau minimal jaugeable 110.

Bien entendu, la présente invention n'est pas limitée aux modes de ralisation qui viennent d'être décrits mais s'étend à toute variante conforme à son esprit.

Le cas échéant une butée, schématiquement représenté sous la référence 120 sur la figure 1, peut être prévue sur le boitier 20, pour servir d'appui au bras 60 et limiter la position basse du bras 60 par rapport au support 30.

Le patin 40 assure en outre les fonctions de butée de frottement du support de boitier de résistance sur le fond et d'amortisseur anti-bruit.

## Revendications

1. Dispositif de mesure de niveau de carburant dans un réservoir de véhicule automobile du type comprenant :
- une embase (10) destinée à être fixée sur une paroi du réservoir,
- un support (30) articulé autour d'un axe horizontal (34) sur la partie de l'embase ( 10) interne au réservoir,
- un patin (40) porté à l'extrémité inférieure du support (30) de sorte que le patin (40) repose contre le fond du réservoir,
- un élément résistif (20) porté par le support (30),
- un flotteur (50) porté par un bras (60) articulé autour d'un axe non vertical (62) sur le support pour suivre le niveau de carburant, et
- un curseur porté par le bras (60) et reposant sur l'élément résistif pour définir une résistance variable en fonction du niveau de liquide contenu dans le réservoir, caractérisé par le fait que, le patin (40) possède un axe de rotation, et le centre de flottaison (52) du flotteur (50) se déplace sur un cercle passant par cet axe de rotation, lequel centre de flottaison (52) du flotteur (50) est coaxial à l'axe de rotation du patin (40) lorsque le niveau de carburant dans le réservoir coïncide avec l'axe de rotation du patin, de sorte que quelle que soit la position du fond du réservoir, en raison de déformations eventuelles du réservoir, lorsque le niveau de carburant coïncide avec l'axe de rotation du patin, le bras (60) de flotteur occupe toujours la même position relative vis à vis du support (30).

2. Dispositif de mesure selon la revendication 1, caractérisé par le fait que le patin (40) définit une enveloppe d'appui sur le fond du réservoir (100) qui est circulaire, centrée sur un axe horizontal coïncidant avec l'axe de rotation du patin.

3. Dispositif de mesure selon l'une des revendications 1 ou 2, caractérisé par le fait que le patin (40) est cylindrique ou sphérique.

4. Dispositif de mesure selon l'une des revendications 1 à 3, caractérisé par le fait que le patin (40) est fixé rigidement sur le support (30).

5. Dispositif de mesure selon l'une des revendications 1 à 3, caractérisé par le fait que le patin (40) est articulé sur le support (30) autour d'un axe horizontal qui coïncide avec l'axe de rotation du patin (40).

6. Dispositif de mesure selon la revendication 1, caractérisé par le fait que le patin (40) possède une section droite verticale non circulaire et qu'il est articulé sur le support (30) autour d'un axe horizontal qui coïncide avec ledit axe de rotation.

7. Dispositif de mesure selon l'une des revendications 1 à 6, caractérisé par le fait que le flotteur est fixé rigidement sur le bras (60).

8. Dispositif de mesure selon l'une des revendications 1 à 6, caractérisé par le fait que le flotteur (50) est articulé sur le bras (60) autour d'un axe horizontal qui coïncide avec le centre de flottaison du flotteur.

9. Dispositif de mesure selon l'une des revendications 1 à 8, caractérisé par le fait que le support (30) porte une butée (120) servant d'appui au bras (60) pour limiter la position basse de celui-ci par rapport au support (30).

## Patentansprüche

1. Meßvorrichtung für das Brennstoffniveau in einem Behälter eines Kraftfahrzeugs, welche umfaßt:
- eine Befestigungsfläche (10), welche dafür vorgesehen ist, an einer Wand des Behälters befestigt zu werden,
- einen Träger (30), der um eine horizontale Achse (34) an dem Teil der Befestigungsfläche (10), der sich innerhalb des Behälters befindet, schwenkbar ist,
- eine Auflageeinrichtung (40), welche am unteren Ende des Trägers (30) derart gehalten ist, daß die Auflageeinrichtung (40) auf dem Boden des Behälters ruht,
- ein resistives Element (20), das von dem Träger (30) getragen wird,
- einen Schwimmer (50), welcher von einem Arm (60) getragen wird, der um eine nicht vertikale Achse (62) an dem Träger schwenkbar ist, um dem Brennstoffniveau zu folgen, und
- einen Gleitkontakt, der von dem Arm (60) getragen wird und auf dem resistiven Element aufliegt, um einen variablen Widerstand als Funktion des Niveaus der Flüssigkeit, die in dem Behälter enthalten ist, zu definieren,
dadurch **gekennzeichnet**, daß
die Auflageeinrichtung (40) eine Rotationsachse besitzt und das Auftriebszentrum (52) des Schwimmers (50) sich auf einem Kreis verschiebt, der durch diese Rotationsachse verläuft, wobei dieses Auftriebszentrum (52) des Schwimmers (50) koaxial mit der Rotationsachse der Auflageeinrichtung (40) ist, wenn das Brennstoffniveau in dem Behälter mit der Rotationsachse der Auflageeinrichtung (40) zusammenfällt, derart, daß, welches auch immer die Position des Bodens des Behälters aufgrund von möglichen Deformationen des Behälters ist, der Arm (60) des Schwimmers immer die gleiche relative Position gegenüber dem Träger (30) einnimmt, wenn das Brennstoffniveau mit der Rotationsachse der Auflageeinrichtung zusammenfällt.

2. Meßvorrichtung nach Anspruch 1, dadurch **gekennzeichnet**, daß die Auflageeinrichtung (40) eine Fläche für die Auflage auf dem Boden des Behälters (100) festlegt, welche kreisförmig und um eine horizontale Achse zentriert ist, die mit der Rotationsachse der Auflageeinrichtung zusammenfällt.

3. Meßvorrichtung nach einem der Ansprüche 1 oder 2, dadurch **gekennzeichnet**, daß die Auflageeinrichtung (40) zylindrisch oder sphärisch ist.

4. Meßvorrichtung nach einem der Ansprüche 1 bis 3, dadurch **gekennzeichnet,** daß die Auflageeinrichtung (40) starr an dem Träger (30) befestigt ist.

5. Meßvorrichtung nach einem der Ansprüche 1 bis 3, dadurch **gekennzeichnet,** daß die Auflageeinrichtung (40) an dem Träger (30) um eine horizontale Achse schwenkbar befestigt ist, die mit der Rotationsachse der Auflageeinrichtung (40) zusammenfällt.

6. Meßvorrichtung nach Anspruch 1, dadurch **gekennzeichnet**, daß die Auflageeinrichtung (40) einen nicht kreisförmigen vertikalen Querschnitt besitzt und daß sie an dem Träger (30) um eine horizontale Achse schwenkbar befestigt ist, die mit der besagten Rotationsachse zusammenfällt.

7. Meßvorrichtung nach einem der Ansprüche 1 bis 6, dadurch **gekennzeichnet,** daß der Schwimmer starr an dem Arm (60) befestigt ist.

8. Meßvorrichtung nach einem der Ansprüche 1 bis 6, dadurch **gekennzeichnet**, daß der Schwimmer (50) an dem Arm (60) um eine horizontale Achse schwenkbar befestigt ist, die mit dem Auftriebszentrum des Schwimmers zusammenfällt.

9. Meßvorrichtung nach einem der Ansprüche 1 bis 8, dadurch **gekennzeichnet,** daß der Träger (30) einen Anschlag (120) trägt, der als Auflage für den Arm (60) dient, um die untere Position desselben bezüglich des Trägers (30) zu begrenzen.

## Claims

1. A device for measuring the level of fuel in a motor vehicle tank, the device being of the type comprising :
a base (10) for fixing to a wall of the tank;
a support (30) hinged about a horizontal axis (34) to the portion of the base (10) inside the tank;
a shoe (40) carried at the bottom end of the support (20) so that the shoe (40) rests against the bottom of the tank;
a resistor element (20) carried by the support (30);
a float (50) carried by an arm (60) which is hinged about a non-vertical axis (62) to the support to track the level of fuel; and
a cursor carried by the arm (60) and engaging the resistor element to define a resistance which varies as a function of the level of liquid contained in the tank,
the device being characterized by the fact that the shoe (40) has an axis of rotation, and the center of buoyancy (52) of the float (50) moves on a circular arc passing through said axis of rotation, said center of buoyancy (52) of the float (50) lying on the axis of rotation of the shoe (40) when the level of fuel in the tank corresponds to the axis of rotation of the shoe, so that regardless of the position of the bottom of the tank, due to possible deformation of the tank, whenever the level of fuel corresponds to the axis of rotation of the shoe, the arm (60) of the float always occupies the same position relative to the support (30).

2. A device according to claim 1, characterized by the fact that the shoe (40) defines a bearing envelope on the bottom of the tank (100) which is circular and centered on a horizontal axis which coincides with the axis of rotation of the shoe.

3. A device according to any one of claims 1 or 2, characterized by the fact that the shoe (40) is cylindrical or spherical.

4. A device according to any one of claims 1 to 3, characterized by the fact that the shoe (40) is rigidly fixed on the support (30).

5. A device according to any one of claims 1 to 3, characterized by the fact that the shoe (40) is hinged to the support (30) about a horizontal axis which coincides with the axis of rotation of the shoe (40).

6. A device according to claim 1, characterized by the fact that the vertical right cross-section of the shoe (40) is non-circular, and the shoe is hinged to the support (30) about a horizontal axis which coincides with said axis of rotation.

7. A device according to any one of claims 1 to 6, characterized by the fact that the float is rigidly fixed to the arm (60).

8. A device according to any one of claims 1 to 6, characterized by the fact that the float (50) is hinged to the arm (60) about a horizontal axis which coincides with the center of buoyancy of the float.

9. A device according to any one of claims 1 to 8, characterized by the fact that the support (30) carries an abutment (120) serving to engage the arm (60) in order to delimit a bottom position thereof relative to the support (30).
